# EUROPEAN PATENT SPECIFICATION

(11) **EP 4 299 454 B1**
(45) Date of publication and mention of the grant of the patent: **01.10.2025**
(21) Application number: 23181121.7
(22) Date of filing: 23.06.2023
(51) Int. Cl.: B65B 31/02, F28D 7/10, B01D 53/26, F28D 7/12, F28F 1/30, F28F 1/32, F28F 17/00

(54) **MACHINE FOR THE VACUUM TREATMENT OF FOOD PRODUCTS**
MASCHINE ZUR VAKUUMBEHANDLUNG VON NAHRUNGSMITTELN
MACHINE POUR LE TRAITEMENT SOUS VIDE DE PRODUITS ALIMENTAIRES

(30) Priority: 27.06.2022 IT 202200013462
(43) Date of publication of application: 03.01.2024
(73) Proprietor: Salvaro, Marziano, 37024 Negrar (Prov. of Verona) (IT)
(72) Inventor: Salvaro, Marziano, 37024 Negrar (Prov. of Verona) (IT)
(74) Representative: Modiano, Micaela Nadia

(56) References cited:
- IT-A1- 202000 004 519
- US-A- 5 230 166

## Description

The present invention relates to a machine for the vacuum treatment of food products.

Machines are known for the vacuum treatment of food products and, more specifically, machines are known which make it possible to package food products inside containers in which a vacuum is created.

Such machines are, in general, constituted by a structure that defines a vacuum chamber which is designed to receive a container, such as for example a bag, in which a food product to be packaged is placed. The vacuum chamber can be connected to a vacuum pump which enables the extraction of the air from the vacuum chamber and therefore also from the container placed in it.

Typically, machines of this type are also provided with means for sealing the container, once the vacuum has been created inside it.

One problem that is found with vacuum treatment machines arises from the fact that, during activation of the vacuum pump, in addition to sucking out the air, water is also extracted from the food products, and takes with it biological material and dry particulate, which, by building up in the vacuum pump, can compromise the correct operation of the vacuum pump.

In order to try to solve this problem, EP 3 875 378 A, in the name of this same applicant, provides for interposing a filtration device between the vacuum chamber and the vacuum pump which is fitted with means that make it possible to vary at least one thermodynamic/fluid dynamics parameter of the air flow that is aspirated from the vacuum chamber.

Although valid in conceptual terms, the structuring of this filtration device has been found to be susceptible of improvements, in particular concerning condensation of the humidity carried by the aspirated air flow, as well as the collection of impurities and of the water held by the aspirated air flow.

The aim of the present invention is to provide a machine for the vacuum treatment of food products which is capable of improving the prior art in one or more of the above-mentioned aspects.

Within this aim, an object of the invention is to provide a machine for the vacuum treatment of food products that enables an optimal separation of solid and liquid components from the air aspirated from the vacuum chamber.

Another object of the invention is to provide a machine for the vacuum treatment of food products that makes it possible to easily extract the water and solid components that have been separated from the air aspirated from the vacuum chamber.

A further object of the invention is to provide a machine for the vacuum treatment of food products that is capable of treating liquids at boiling temperature and solid foods at cooking temperature.

Another object of the present invention is to provide a machine for the vacuum treatment of food products that can be used for vacuum preservation or for vacuum cooling of foods.

Another object of the present invention is to provide a machine for the vacuum treatment of food products that can offer the widest guarantees of reliability and safety in operation.

A further object of the present invention is to overcome the drawbacks of the background art in a manner that is alternative to any existing solutions.

Another object of the invention is to provide a machine for the vacuum treatment of food products that is relatively easy to provide, so as to be competitive from a purely economic viewpoint as well.

This aim and these and other objects which will become better apparent hereinafter are achieved by a machine for the vacuum treatment of food products according to claim 1, optionally provided with one or more of the characteristics of the dependent claims.

Further characteristics and advantages of the invention will become better apparent from the description of a preferred, but not exclusive, embodiment of the machine according to the invention, which is illustrated by way of non-limiting example in the accompanying drawings wherein:

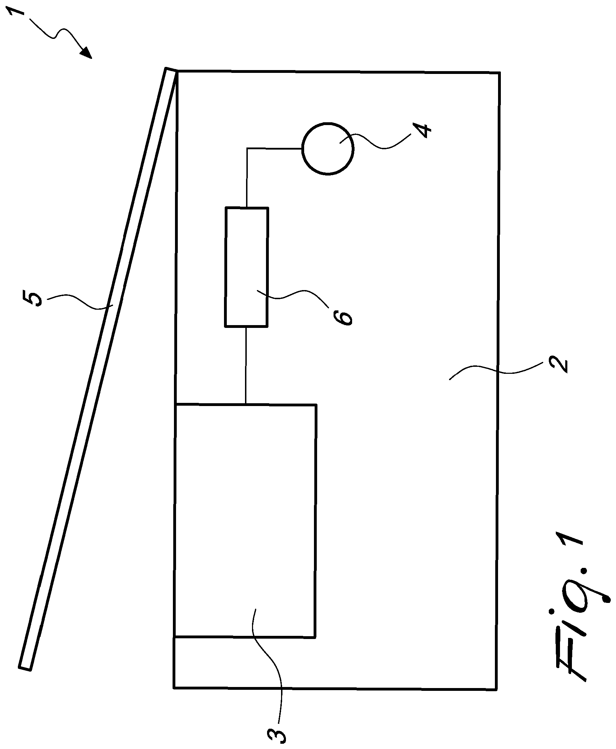

Figure 1 is a schematic diagram of the machine according to the invention;

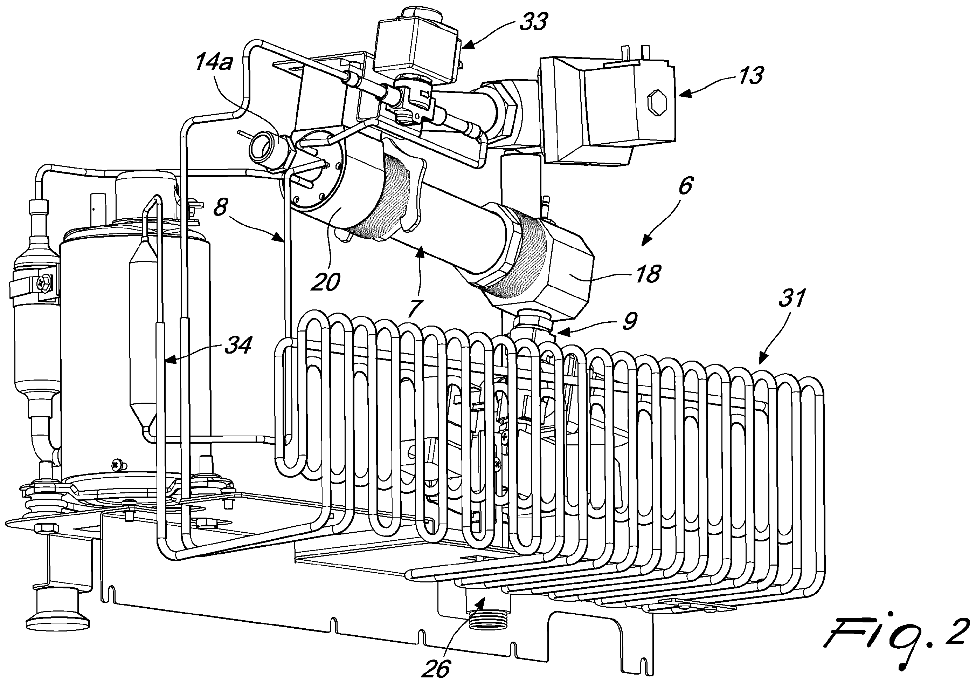

Figure 2 is a perspective view of a filtration device of the machine according to the invention;
Figure 3 is a side view of the filtration device;

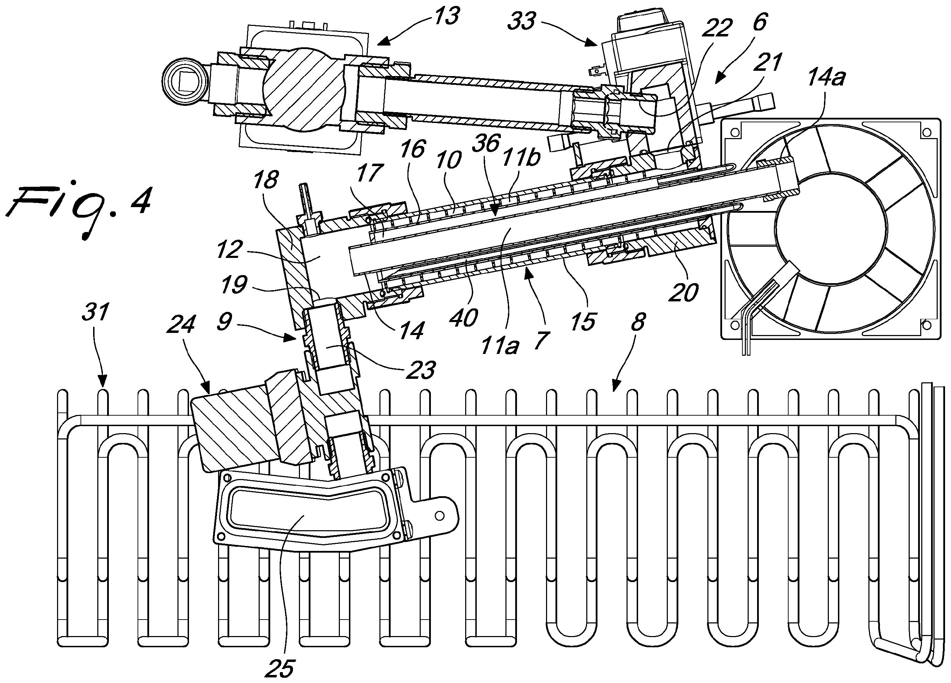

Figure 4 is a cross-sectional view taken along the line IV-IV of Figure 3;
Figure 5 is a front elevation view of the filtration device;
Figure 6 is a perspective view of a conveyor of the filtration device with parts removed in order to show its interior;
Figure 7 is a perspective view of an annular fin placed inside the conveyor.

With reference to the figures, the machine for the vacuum treatment of food products according to the invention, generally designated by the reference numeral 1, comprises a base structure 2 which defines a vacuum chamber 3, inside which the food products to be treated can be placed, optionally arranged in a container for vacuum packaging.

The vacuum chamber 3 can be connected to a vacuum pump 4, in order to allow the suction of an air flow from the vacuum chamber.

For example, the vacuum chamber 3 can be accessible from above, in order to allow the insertion therein or the extraction therefrom of the food products or of their containers, and can be closed by way of an upper closure lid 5, which is hinged to the base structure 2.

At least one filtration device 6 is interposed between the vacuum chamber 3 and the vacuum pump 4 and has means for varying at least one thermodynamic/fluid dynamics parameter of the air flow aspirated by the vacuum pump 4.

According to the invention, the filtration device 6 comprises at least one conveyor 7 of the air flow, which defines a path inside it for the air flow taken from the vacuum chamber 3 by the vacuum pump 4 and which is equipped, along the path taken by the air flow inside it, with means that make it possible to vary the direction with which the air flow advances inside the conveyor.

Such means, by determining changes of the advancement direction of the air flow on its path inside the conveyor 7, facilitate the separation from the air flow of water and solid particles that are carried by the air flow and which originate from the vacuum chamber.

The conveyor 7 is, furthermore, with at least one part thereof, in a heat exchange relationship with a cooling circuit 8, so that the air flow that passes through the conveyor can undergo a cooling that is capable of precipitating the condensation of the water contained in the air flow.

Also according to the invention, the filtration device 6 also comprises at least one collection manifold 9, which is connected to the conveyor 7 and which makes it possible to collect the water and solid particles that are separated from the air flow during its passage inside the conveyor 7.

In particular, the conveyor 7 defines, for the air flow, at least one path segment that is in a heat exchange relationship with the cooling circuit 8 and which is provided, at at least one portion thereof, with means 10 for increasing the exchange of heat with the cooling circuit 8, which are structured so as to provide a plurality of openings for and barriers to the passage of the air flow through the aforementioned path segment, which facilitate the separation of water and of solid particles from the air flow.

More specifically, the conveyor 7 defines, inside it, at least two substantially straight path segments which are passed through in sequence by the air flow with different advancement directions. More precisely, inside the conveyor 7 there is a first path segment 11a, substantially straight, and a second path segment 11b, which is substantially parallel to the first path segment 11a and which is passed through by the air flow with an opposite advancement direction to the advancement direction with which the air flow passes through the first path segment 11a.

In particular, between the first and the second path segment 11a, 11b there is an inversion chamber 12 for reversing the advancement direction of the air flow, which in turn is connected to the collection manifold 9.

In practice, the change of advancement direction of the air flow, which takes place in the inversion chamber 12 with rotation of the speed vector with the air flow performing a half-circle turn enables the separation of the heavy particles from the air and their subsequent evacuation together with the water.

Advantageously, a control valve 13 for the air flow is interposed between the conveyor 7 and the vacuum pump 4, which is actuated so as to be able to vary the flow rate of air passing through the conveyor 7, as will be explained below. This control valve 13 is, conveniently, constituted by a solenoid valve.

Getting into the details of construction of the filtration device 6, it can be noted that the conveyor 7 is constituted by a first tubular duct 14, which defines the first path segment 11a axially, while a second tubular duct 15 is mounted around and substantially coaxial to the first tubular duct 14.

A cylindrical side wall 16 is interposed between the first and the second tubular duct 14 and 15, and is arranged substantially coaxial to the first tubular duct 14 and delimits, with the first tubular duct 14, at least one passage channel 17 for the cooling fluid circulating in the cooling circuit 8, while an interspace is defined between the cylindrical side wall 16 and the second tubular duct 15 which, in practice, defines the second path segment 11b of the air flow.

It should be noted that there are, conveniently, coupled hermetically to the two opposite axial ends of the second tubular duct 15, respectively a first closing body 18, which defines the inversion chamber 12 inside it and which has, in a downward region, a communication opening 19 connected to the drainage manifold 9, and a second closing body 20, which defines a communication channel 21 inside it connecting the interspace that is present between the cylindrical side wall 16 and the second tubular duct 15 and which defines the second path segment 11b of the air flow, with an outlet opening 22 for the air flow, also defined in the second closing body 20 and which, by way of the interposition of the control valve 13, is connected to the vacuum pump 4.

As illustrated, the first tubular duct 14 passes axially through the second closing body 20, protruding from it with a first end thereof, which is connected to the vacuum chamber 3, for example by way of a connector 14a.

At its other end, the first tubular duct 14 is connected to the inversion chamber 12.

Conveniently, the first and the second tubular duct 14 and 15 are arranged with their axes inclined downhill, proceeding in the direction of the inversion chamber 12, in order to facilitate the drainage toward the inversion chamber of the water and of the solid particles that are separated from the air flow along the first and the second path segment 11a and 11b.

Advantageously, the collection manifold 9 comprises a drainage duct 23 which is connected to the inversion chamber 12 and is controlled by a shut-off valve 24.

Conveniently, the drainage duct 23 extends from the communication opening 19 of the inversion chamber 12 substantially perpendicularly to the axis of the first and of the second tubular duct 14 and 15, and leads into a collection tank 25, which in turn is provided with a drainage valve 26, for emptying the tank, and with an air inlet valve 27, which is opened when the collection tank 25 is being emptied.

Conveniently, the shut-off valve 24 of the drainage duct 23 and the air inlet valve 27 associated with the collection tank 25 are constituted by solenoid valves, while the drainage valve 26 of the collection tank 25 is, preferably, constituted by an automatic reed valve.

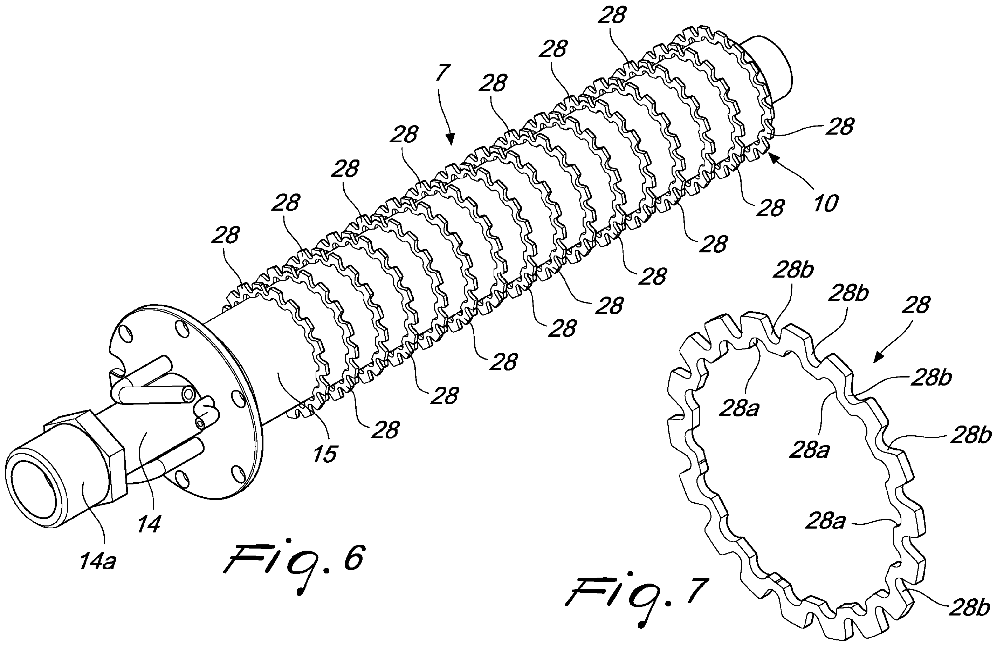

As shown, in particular, in Figures 6 and 7, according to a preferred embodiment, such means 10 that make it possible to increase the exchange of heat between the air flow that passes through the conveyor 7 and the cooling circuit 8 are advantageously constituted by a plurality of annular fins 28 which are arranged, axially mutually spaced apart, about the cylindrical side wall 16 and which extend radially inside the interspace present between the cylindrical side wall 16 and the second tubular duct 15.

These annular fins 28 are preferably in contact, with their internal edge, with the second tubular duct 15 and are, advantageously, contoured so as to each present, along the respective internal edge, a plurality of first notches 28a, arranged circumferentially mutually spaced apart, and, along the respective external edge, a plurality of second notches 28b, arranged in an offset manner with respect to the first notches 28a.

In particular, the function of the notches 28a, 28b of the annular fins 28 is to provide, within the interspace that defines the second path segment 11b, openings that allow the passage of the air flow, while the portions of the annular fins 28 that are located between the notches 28a, 28b provide barriers to retain particles that are carried by the air flow, so making it impossible for these to be borne along toward the vacuum pump 4.

More specifically, the annular fins 28 thus structured are arranged so as to constitute, in practice, a three-dimensional network of openings and barriers inside the conveyor 7, and they therefore make it possible to increase the condensation of the humidity carried by the air flow, the collection of the impurities carried in the air flow, the speed of de-icing during de-icing, and the quantity of water that flows toward the collection manifold 9, through the notches 28 that are present along their edges.

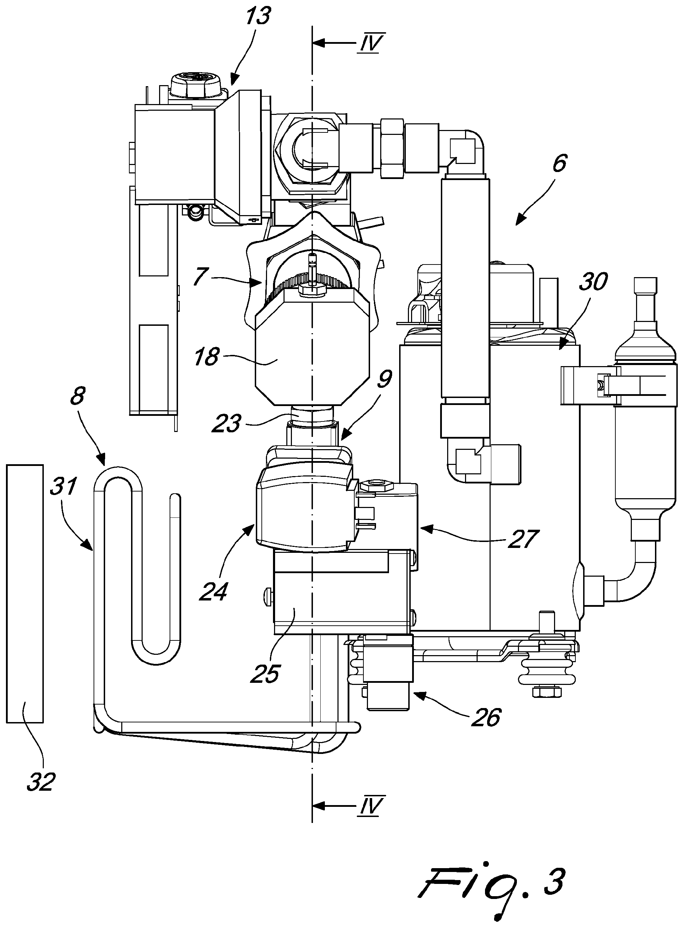

Advantageously, the cooling circuit 8 comprises a compressor 30, a condenser 31 which is conveniently constituted by a segment of the serpentine circuit and with which a condensation fan 32 is associated, illustrated schematically in Figure 3, a hot gas valve 33, an adiabatic capillary tube 34 and an evaporator 36 in a heat exchange relationship with the conveyor 7 and, in practice, is provided by the passage channel 17, defined between the cylindrical side wall 16 and the first tubular duct 14 of the conveyor 7, in which the cooling fluid that circulates in the cooling circuit 8 flows.

It should be noted that, conveniently, a tube 40 is inserted in the passage channel 17 for extracting the cooling fluid in the gaseous phase and the lubrication oil, and is connected to the remaining part of the cooling circuit 8 and enables the recirculation of any lubrication oil that may be released by the compressor 30.

It must be noted that the hot gas valve 33 inserted in the cooling circuit 8 makes it possible to exchange the condensing part with the evaporating part of the cooling circuit 8 and therefore enables the rapid de-icing of the evaporator 36 and the consequent outflow of the water containing any solids into the drainage manifold 8.

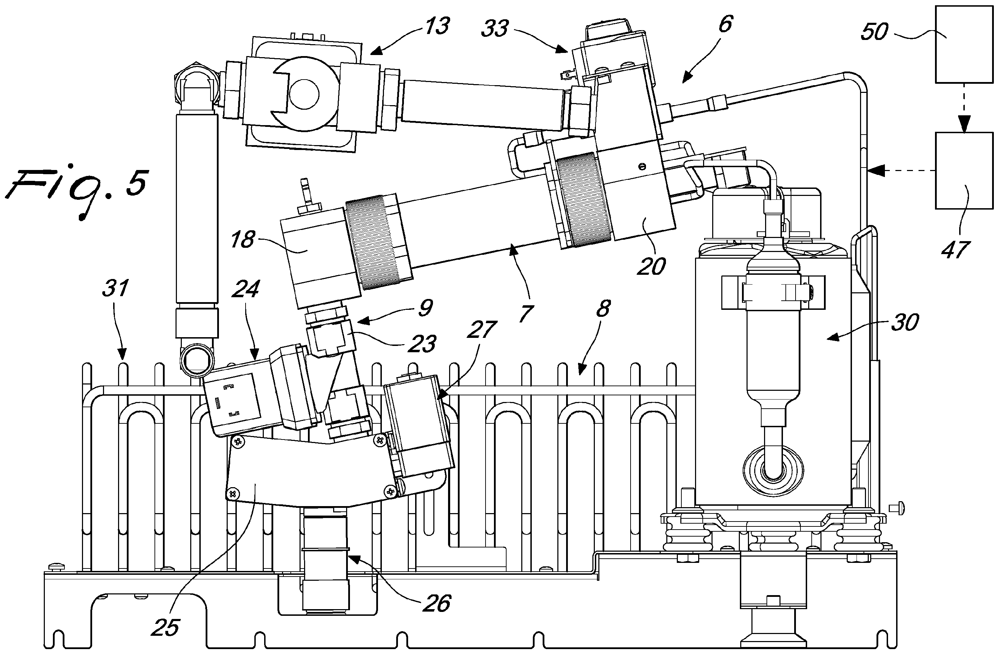

Advantageously, along the conveyor 7 and, more specifically, along the path defined inside the conveyor 7 for the air flow taken from the vacuum chamber 3, there are at least two sensors and, more precisely, at least one pressure sensor 45 and at least one temperature sensor 46, which are functionally connected to an electronic control unit 47, shown schematically in Figure 5, the function of which, using a dedicated, experimentally-defined algorithm, is to drive the compressor 30, the condensation fan 32 and the valves 13, 24, 26, 27 and 33 as a function of the pressure and temperature values detected by the sensors 45 and 46.

In particular, the pressure sensor 45 is advantageously arranged at the inversion chamber 12, while the temperature sensor 46 is arranged in the communication channel 21.

It must also be added that the surfaces of the filtration device 6 and, in particular, of the conveyor 7 are, conveniently, treated with a thin film of water-repellent material, in order to facilitate the flow of droplets of condensation water.

The operation of the machine according to the invention is the following.

A food product, or a container in which a food product is arranged, to be vacuum packaged is placed inside the vacuum chamber 3 and the vacuum chamber is closed with the upper closure lid 5.

The vacuum pump 4 is activated to execute a work cycle of vacuum cooling or of vacuum packaging.

The air aspirated by the vacuum pump 4, through the connector 14a, enters the first tubular duct 14 and flows, in an advancement direction, through the first path segment 11a of the conveyor 7, where it begins its cooling and the condensation of at least a part of the humidity contained in it, until it reaches the inversion chamber 12.

At the inversion chamber 12, the air aspirated by the vacuum pump 4 is subjected to a change of its advancement direction, by being channelled in the interspace that defines the second path segment 11b of the conveyor 7, so that condensed water and particles carried by the air can be separated from the air, collecting on the bottom of the inversion chamber 12.

The air aspirated by the vacuum pump 4 then flows along the second path segment 11b, with an opposite advancement direction to the advancement direction with which it passed through the first path segment 11a, passing through the openings defined by the notches 28a and 28b of the annular fins 28, which contribute to retaining the particles carried by the air with their walls, and to producing the condensation of more humidity contained in the air.

By way of the second path segment 11b, the air flow reaches the communication channel 21 and, through the outlet opening 22, the control valve 13, before arriving at the vacuum pump 4.

The water and the particles collected in the inversion chamber 12 can flow, through the drainage duct 23, toward the collection tank 25, when the shut-off valve 24 is open.

The shut-off valve 24 is controlled by the electronic control unit 47 on the basis of the process algorithm implemented, and is open or closed as a function of the need to control both the air flow and the water flow.

The collection tank 25 is emptied once the drainage valve 26 and the air inlet valve 27 have been opened.

It should be noted that the shut-off valve 24 is always closed immediately before the collection tank 25 is emptied, i.e. before the drainage valve 26 is opened.

The electronic control unit 47, by calculation, associates the values of the two pressure and temperature state variables originating from the sensors 45 and 46 with the open or closed conditions of the control valve 13 and respectively the open and closed positions of the drainage valve 26 and of the air inlet valve 27.

The electronic control unit 47, again by processing the values of the two pressure and temperature state variables originating from the sensors 45 and 46, drives the on/off status of the condensation fan 32 and the flow rate of the cooling fluid circulating in the refrigeration circuit 8 by controlling the RPM of the motor of the compressor 30, as well as the open/closed state of the hot gas valve 33.

From a physics point of view, the filtration device 6 in this manner executes the condensation of the humidity present in the air aspirated by the vacuum pump 4, during the process of vacuum cooling or of vacuum packaging, of considerable quantities of water and of foods inserted at cooking temperature or at boiling temperature (at atmospheric pressure at sea level). The quantity of condensed water is correlated to the saturation pressure and to the saturation temperature of the water or of the food placed in the vacuum chamber 3 or in the container arranged in the vacuum chamber 3. The high correlation value is generated continuously by controlling the slope of the pressure curve in the conveyor 7 and of the temperature curve of the evaporator 36, which is done using the signals originating from the sensors 45 and 46 by the electronic control unit 47.

Controlling the variation of flow enables the continuous condensation of the humidity contained in the air and prevents the condensed water from freezing.

Controlling the variation of flow is done by the control valve 13.

In particular, the control valve 13 is driven by the electronic control unit 47, using pulses that vary over time, as a function of the temperature and pressure values detected by the sensors 45 and 46.

A calculation algorithm enables the electronic control unit 47 to find the temperature of the liquid under a vacuum so as to calculate the saturation pressure for each temperature value reached.

The combined action of the valves 24, 26 and 27, under the control of the electronic control unit 47, enables the collection and then the draining of the water and of the solid particles separated from the air flow, thus preventing the entry of atmospheric air into the conveyor 7.

In more detail, it is possible, when the cycle of operation of the machine is first started, for the electronic control unit 47 to command the opening of the control valve 13 in modulated mode i.e. alternating the opening and the closing of the control valve with preset respective opening and closing times.

As a consequence, the pressure inside the vacuum chamber 3 falls according to a characteristic curve, determined experimentally and belonging to a library of characteristic curves contained in a memory unit 50 which is functionally connected to the electronic control unit 47.

It must be noted that the frequency with which the electronic control unit executes the opening and closing of the control valve 13 is contained in a table of predetermined frequencies, stored in the memory unit 50.

In this first step of the cycle, the electronic control unit 47 monitors the trend of the temperature detected by way of the temperature sensor 46.

If the electronic control unit 47 detects that the temperature value measured by the temperature sensor 46 is greater than a preset threshold temperature value, then the electronic control unit 47 commands the closing of the control valve 13.

The control valve 13 is kept closed by the electronic control unit 47, at least until the electronic control unit 47 detects that the temperature value measured by the temperature sensor 46 has returned below a preset temperature value for opening the control valve 13.

The electronic control unit 47 then commands the control valve 13 to open again in modulated mode, and operation continues as described until the temperature of the food product reaches a safety limit temperature value, also determined experimentally, usually approximately 28-30°C.

Reaching this safety limit temperature value is determined by the electronic control unit 47 using the pressure detection made by the pressure sensor 45 and on the basis of preset thermodynamic tables which are also loaded in the memory unit 50.

In the first step of the cycle, the condensed vapor is drained by way of condensation drainage cycles, which involve the coordinated opening/closing of the valves 24, 26 and 27 and which are executed with a greater frequency at the start of the cycle, and then with a lesser frequency later on in the cycle.

At this point, the electronic control unit 47 moves to check the trend of the pressure using the measurements made by the pressure sensor 45, in order to verify that the machine will not become jammed, owing to the obstruction of the conveyor 7 as a result of the formation of ice inside it.

If the electronic control unit 47 detects, in this second step of the cycle, that the pressure measured by the pressure sensor 45 does not fall for a certain period but the temperature measured by the temperature sensor 46 by contrast falls constantly, then it commands an automatic de-icing cycle, by commanding the thermal inversion of the cooling circuit 8 using the hot gas valve, so as to heat the conveyor 7, and commanding the coordinated opening/closing of the valves 24, 26 and 27 so as to drain the water created by the de-icing.

In practice it has been found that the invention fully achieves the intended aim and objects and, in particular, it is emphasized that the machine according to the invention makes it possible to obtain extremely low relative humidity values in the air aspiration duct proximate to the nozzle of the vacuum pump.

The invention thus conceived is susceptible of numerous modifications and variations, all of which are within the scope of the appended claims. Moreover, all the details may be substituted by other, technically equivalent elements.

In practice the materials employed, provided they are compatible with the specific use, and the contingent dimensions and shapes, may be any according to requirements and to the state of the art.

The application claims priority from Italian Patent Application No. 102022000013462.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A machine (1) for vacuum treatment of food products, which comprises a base structure (2) which defines a vacuum chamber (3) which is configured to be connected to a vacuum pump (4), for the suction of an air flow from said vacuum chamber (3), at least one filtration device (6) being interposed between said vacuum chamber (3) and said vacuum pump (4) and having means for varying at least one thermodynamic/fluid dynamics parameter of the air flow aspirated by said vacuum pump (4), **characterized in that** said filtration device (6) comprises at least one conveyor (7) of the air flow, which is provided with means for varying an advancement direction of the air flow into a first path segment (11a) and a second path segment (11b) which are both, with at least one part thereof, in a heat exchange relationship with a cooling circuit (8), and at least one collection manifold (9) for collecting the water and the particles separated from the air flow.

2. The machine according to claim 1, **characterized in that** in at least one portion of said first and second path segments (11a, 11b) there being means (10) for increasing the exchange of heat with said cooling circuit (8) and are adapted to provide a plurality of openings for and barriers to the passage of said air flow.

3. The machine according to one or more of the preceding claims, **characterized in that** said conveyor (7) defines said first path segment (11a) and said a second path segment (11b) which are substantially mutually parallel and can be passed through in sequence by said air flow along mutually opposite advancement directions, between said first and said second path segments (11a, 11b) there being an inversion chamber (12) for reversing the advancement direction of the air flow which is connected to said collection manifold (9).

4. The machine according to one or more of the preceding claims, **characterized in that** it comprises, between said conveyor (7) and said vacuum pump (4), a valve for controlling the air flow which is adapted to vary the rate at which the air flow passes through said conveyor (7).

5. The machine according to one or more of the preceding claims, **characterized in that** said conveyor (7) comprises a first tubular duct (14), which defines said first path segment (11a), and a second tubular duct (15), which is mounted substantially coaxial to said first tubular duct (14), a cylindrical side wall (16) being interposed between said first and said second tubular duct, being coaxial to said first tubular duct (14) and delimiting, with said first tubular duct (14), at least one passage channel (17) for the cooling fluid that circulates in said cooling circuit (8), an interspace being defined between said cylindrical side wall (16) and said second tubular duct (15) and providing said second path segment (11b).

6. The machine according to one or more of the preceding claims, **characterized in that** said collection manifold (9) comprises a drainage duct (23) which is connected to said inversion chamber (12) and is controlled by a shut-off valve (24), said drainage duct (23) leading into a collection tank (25), which is provided with a drainage valve (26) and with an air inlet valve (27).

7. The machine according to one or more of the preceding claims, **characterized in that** said means (10) for increasing the exchange of heat comprise a plurality of annular fins (28) which are mutually spaced apart around said cylindrical side wall (16), said annular fins (28) each having, along the respective internal edge and along the respective external edge, a plurality of notches (28a, 28b) which are arranged in a mutually offset manner.

8. The machine according to one or more of the preceding claims, **characterized in that** said cooling circuit (8) comprises a compressor (30), a condenser (31) with a condensation fan (32) associated therewith, a hot gas valve (33), an adiabatic capillary tube (34), and an evaporator (36) in a heat exchange relationship with said conveyor (7).

9. The machine according to one or more of the preceding claims, **characterized in that** it comprises, along said conveyor (7), at least one pressure sensor (45) and at least one temperature sensor (46), which are functionally connected to an electronic control unit (47) which is adapted to drive said compressor (30), said condensation fan (32) and said valves (13, 24, 26, 27, 33) as a function of the pressure and temperature values detected by said sensors (45, 46).

10. The machine according to one or more of the preceding claims, **characterized in that** the surfaces of said filtration device (6) are treated with a thin film of water-repellent material.

## Patentansprüche

1. Eine Maschine (1) zur Vakuumbehandlung von Nahrungsmitteln, die eine Grundstruktur (2) umfasst, welche eine Vakuumkammer (3) bestimmt, die ausgebildet ist, um an eine Vakuumpumpe (4) angeschlossen zu werden, zum Ansaugen eines Luftstroms aus der Vakuumkammer (3); wobei mindestens eine Filtervorrichtung (6) zwischen der Vakuumkammer (3) und der Vakuumpumpe (4) angeordnet ist und Mittel hat, um mindestens einen Thermodynamik-/Fluiddynamik-Parameter des von der Vakuumpumpe (4) angesaugten Luftstroms zu verändern; **dadurch gekennzeichnet, dass** die Filtervorrichtung (6) mindestens eine Fördervorrichtung (7) für den Luftstrom umfasst, die mit Mitteln zum Verändern einer Bewegungsrichtung des Luftstroms in ein erstes Pfadsegment (11a) und ein zweites Pfadsegment (11b) ausgestattet ist, welche beide, mit mindestens einem Teil davon, in einer Wärmeaustauschbeziehung mit einem Kühlkreislauf (8) stehen, und mindestens einen Sammler (9) zum Sammeln des Wassers und der vom Luftstrom abgetrennten Partikel.

2. Die Maschine gemäß Anspruch 1, **dadurch gekennzeichnet, dass** sich in mindestens einem Teil des ersten und des zweiten Pfadsegments (11a, 11b) Mittel (10) zur Erhöhung des Wärmeaustauschs mit dem Kühlkreislauf (8) befinden und ausgebildet sind, um eine Vielzahl von Öffnungen für und Barrieren gegenüber dem Durchlassen des Luftstroms bereitzustellen.

3. Die Maschine gemäß einem oder mehreren der obigen Ansprüche, **dadurch gekennzeichnet, dass** die Fördervorrichtung (7) das erste Pfadsegment (11a) und das zweite Pfadsegment (11b) bestimmt, die im Wesentlichen zueinander parallel sind und nacheinander von dem Luftstrom in einander entgegengesetzten Bewegungsrichtungen durchströmt werden können; wobei sich zwischen dem ersten und dem zweiten Pfadsegment (11a, 11b) eine Inversionskammer (12) zum Umkehren der Bewegungsrichtung des Luftstroms befindet, die mit dem Sammler (9) verbunden ist.

4. Die Maschine gemäß einem oder mehreren der obigen Ansprüche, **dadurch gekennzeichnet, dass** sie zwischen der Fördervorrichtung (7) und der Vakuumpumpe (4) ein Ventil zum Steuern des Luftstroms umfasst, das ausgebildet ist, um die Geschwindigkeit zu ändern, mit welcher der Luftstrom die Fördervorrichtung (7) passiert.

5. Die Maschine gemäß einem oder mehreren der obigen Ansprüche, **dadurch gekennzeichnet, dass** die Fördervorrichtung (7) eine erste Rohrleitung (14) umfasst, die das erste Pfadsegment (11a) bestimmt, und eine zweite Rohrleitung (15), die im Wesentlichen koaxial mit der ersten Rohrleitung (14) montiert ist, wobei eine zylindrische Seitenwand (16) zwischen der ersten und der zweiten Rohrleitung angeordnet ist, die koaxial mit der ersten Rohrleitung (14) ist und mit der ersten Rohrleitung (14) mindestens einen Durchlasskanal (17) für das Kühlfluid begrenzt, das in dem Kühlkreislauf (8) zirkuliert, wobei ein Zwischenraum zwischen der zylindrischen Seitenwand (16) und der zweiten Rohrleitung (15) bestimmt ist und das zweite Pfadsegment (11b) bildet.

6. Die Maschine gemäß einem oder mehreren der obigen Ansprüche, **dadurch gekennzeichnet, dass** der Sammler (9) eine Ablassleitung (23) umfasst, die mit der Inversionskammer (12) verbunden und von einem Absperrventil (24) gesteuert ist, wobei die Ablassleitung (23) in einen Sammeltank (25) führt, der mit einem Ablassventil (26) und mit einem Lufteinlassventil (27) ausgestattet ist.

7. Die Maschine gemäß einem oder mehreren der obigen Ansprüche, **dadurch gekennzeichnet, dass** die Mittel (10) zur Erhöhung des Wärmeaustauschs eine Vielzahl ringförmiger Flügel (28) umfassen, die um die zylindrische Seitenwand (16) voneinander beabstandet sind, wobei die ringförmigen Flügel (28) jeweils entlang der entsprechenden Innenkante und entlang der entsprechenden Außenkante eine Vielzahl von Einkerbungen (28a, 28b) haben, die zueinander versetzt angeordnet sind.

8. Die Maschine gemäß einem oder mehreren der obigen Ansprüche, **dadurch gekennzeichnet, dass** der Kühlkreislauf (8) einen Kompressor (30), einen Kondensator (31) mit damit verbundenem Kondensatorlüfter (32), einen Heißgasschieber (33), ein adiabatisches Kapillarrohr (34) und einen Verdampfer (36) in Wärmeaustausch-Beziehung mit der Fördervorrichtung (7) umfasst.

9. Die Maschine gemäß einem oder mehreren der obigen Ansprüche, **dadurch gekennzeichnet, dass** sie entlang der Fördervorrichtung (7) mindestens einen Drucksensor (45) und mindestens einen Temperatursensor (46) umfasst, die funktionell mit einer elektronischen Steuerungseinheit (47) verbunden sind, welche ausgebildet ist, um den Kompressor (30), den Kondensatorlüfter (32) und die Ventile (13, 24, 26, 27, 33) in Abhängigkeit von den Druck- und Temperaturwerten, die von den Sensoren (45, 46) erfasst werden, zu betreiben.

10. Die Maschine gemäß einem oder mehreren der obigen Ansprüche, **dadurch gekennzeichnet, dass** die Oberflächen der Filtervorrichtung (6) mit einem dünnen Film aus wasserabweisendem Material behandelt sind.

## Revendications

1. Machine (1) pour le traitement sous vide de produits alimentaires, qui
comprend une structure de base (2) qui définit une chambre à vide (3) configurée pour être reliée à une pompe à vide (4), pour aspirer un flux d'air de ladite chambre à vide (3), au moins un dispositif de filtration (6) étant interposé entre ladite chambre à vide (3) et ladite pompe à vide (4) et comportant des moyens pour faire varier au moins un paramètre thermodynamique/fluidodynamique du flux d'air aspiré par ladite pompe à vide (4), **caractérisée en ce que** ledit dispositif de filtration (6) comprend au moins un convoyeur (7) du flux d'air, qui est pourvu de moyens pour faire varier une direction d'avancement du flux d'air dans un premier segment de trajet (11a) et un deuxième segment de trajet (11b) qui sont tous deux, avec au moins une partie de ceux-ci, en relation d'échange thermique avec un circuit de refroidissement (8), et au moins un collecteur (9) pour collecter l'eau et les particules séparées du flux d'air.

2. La machine selon la revendication 1, **caractérisée en ce que** dans au moins une partie desdits premier et deuxième segments de trajet (11a, 11b) se trouvent des moyens (10) pour augmenter l'échange de chaleur avec ledit circuit de refroidissement (8) et sont adaptés pour fournir une pluralité d'ouvertures et de barrières pour le passage dudit flux d'air.

3. La machine selon une ou plusieurs des revendications précédentes, **caractérisée en ce que** ledit convoyeur (7) définit ledit premier segment de trajet (11a) et ledit deuxième segment de trajet (11b) qui sont sensiblement parallèles entre eux et peuvent être traversés successivement par ledit flux d'air selon des directions d'avancement mutuellement opposées, entre lesdits premier et deuxième segments de trajet (11a, 11b), une chambre d'inversion (12) étant prévue pour inverser la direction d'avancement du flux d'air, laquelle est reliée audit collecteur (9).

4. La machine selon l'une ou plusieurs des revendications précédentes, **caractérisée en ce qu'**elle comprend, entre ledit convoyeur (7) et ladite pompe à vide (4), une vanne de commande du flux d'air qui est adaptée pour faire varier la vitesse à laquelle le flux d'air passe à travers ledit convoyeur (7).

5. La machine selon l'une ou plusieurs des revendications précédentes, **caractérisée en ce que** ledit convoyeur (7) comprend un premier conduit tubulaire (14), qui définit ledit premier segment de trajet (11a), et un deuxième conduit tubulaire (15), qui est monté sensiblement coaxialement audit premier conduit tubulaire (14), une paroi latérale cylindrique (16) étant interposée entre lesdits premier et deuxième conduits tubulaires, étant coaxiale audit premier conduit tubulaire (14) et délimitant, avec ledit premier conduit tubulaire (14), au moins un canal de passage (17) pour le fluide de refroidissement qui circule dans ledit circuit de refroidissement (8), un espace étant défini entre ladite paroi latérale cylindrique (16) et ledit deuxième conduit tubulaire (15) et formant ledit deuxième segment de trajet (11b).

6. La machine selon l'une ou plusieurs des revendications précédentes, **caractérisée en ce que** ledit collecteur (9) comprend un conduit de drainage (23) qui est relié à ladite chambre d'inversion (12) et est commandé par une vanne d'arrêt (24), ledit conduit de drainage (23) débouchant dans un réservoir collecteur (25), qui est muni d'une vanne de drainage (26) et d'une vanne d'admission d'air (27).

7. La machine selon l'une ou plusieurs des revendications précédentes, **caractérisée en ce que** lesdits moyens (10) pour augmenter l'échange de chaleur comprennent une pluralité d'ailettes annulaires (28) qui sont mutuellement espacées autour de ladite paroi latérale cylindrique (16), lesdites ailettes annulaires (28) ayant chacune, le long du bord interne respectif et le long du bord externe respectif, une pluralité d'encoches (28a, 28b) qui sont disposées de manière décalée les unes par rapport aux autres.

8. La machine selon une ou plusieurs des revendications précédentes, **caractérisée en ce que** ledit circuit de refroidissement (8) comprend un compresseur (30), un condenseur (31) avec un ventilateur de condensation (32) associé à celui-ci, une vanne de gaz chaud (33), un tube capillaire adiabatique (34) et un évaporateur (36) en relation d'échange thermique avec ledit convoyeur (7).

9. La machine selon une ou plusieurs des revendications précédentes, **caractérisée en ce qu'**elle comprend, le long dudit convoyeur (7), au moins un capteur de pression (45) et au moins un capteur de température (46), qui sont reliés de manière fonctionnelle à une unité de commande électronique (47) qui est adaptée pour entraîner ledit compresseur (30), ledit ventilateur de condensation (32) et lesdites vannes (13, 24, 26, 27, 33) en fonction des valeurs de pression et de température détectées par lesdits capteurs (45, 46).

10. La machine selon une ou plusieurs des revendications précédentes, **caractérisée en ce que** les surfaces dudit dispositif de filtration (6) sont traitées avec un film mince de matériau hydrofuge.
